Europäisches Patentamt

European Patent Office

Office européen des brevets

(19)

(11) **EP 0 653 606 B1**

(12) **FASCICULE DE BREVET EUROPEEN**

(45) Date de publication et mention
de la délivrance du brevet:
**11.03.1998 Bulletin 1998/11**

(51) Int Cl.⁶: **G01B 7/14**

(21) Numéro de dépôt: **94402582.4**

(22) Date de dépôt: **16.11.1994**

(54) **Dispositif pour effectuer la mesure dynamique de la distance entre les faces en regard du rotor et du stator d'une machine tournante**

Vorrichtung zur dynamischen Messung des Abstandes zwischen einander gegenüberliegenden Rotor- und Statorflächen einer rotierenden Maschine

Device for dynamically measuring the distance between opposing faces of a rotor und stator in a rotating machine

(84) Etats contractants désignés:
**DE FR GB**

(30) Priorité: **17.11.1993 FR 9313708**

(43) Date de publication de la demande:
**17.05.1995 Bulletin 1995/20**

(73) Titulaire: **SOCIETE NATIONALE D'ETUDE ET DE CONSTRUCTION DE MOTEURS D'AVIATION, "S.N.E.C.M.A."**
**F-75015 Paris (FR)**

(72) Inventeur: **Fillion, Jean-Claude**
**F-75015 Paris (FR)**

(56) Documents cités:
**EP-A- 0 172 766**    **EP-A- 0 246 576**
**EP-A- 0 378 017**    **FR-A- 2 608 751**
**GB-A- 2 073 427**    **US-A- 4 063 167**
**US-A- 4 876 505**

- **IEEE TRANSACTIONS ON INSTRUMENTATION AND MEASUREMENT, vol. 41, no. 5, octobre 1992, New York US, pages 674-678; G.R. SARMA et al.: 'Capacitance-type blade-tip clearance measurement system using a dual amplifier with ramp/dc inputs and integration'**

**Description**

La présente invention se rapporte à un dispositif permettant d'effectuer, par une méthode capacitive, la mesure dynamique de la distance entre les faces en regard du rotor et du stator d'une machine tournante. L'invention s'applique notamment à la mesure dynamique du jeu radial qui existe entre l'extrémité des aubes d'une roue de turbomachine et la paroi du carter entourant cette roue.

Le jeu régnant entre les faces en regard du rotor et du stator d'une machine tournante est un paramètre important qui influe notablement sur les performances de la machine, quel que soit le type de machine tournante considéré ; c'est le cas en particulier des jeux entre l'extrémité des aubes et le carter dans les compresseurs et les turbines. Ces jeux pouvant varier de manière importante avec les variations thermiques et mécaniques, il est primordial pour les motoristes de connaître l'évolution de ces jeux sur la totalité de la circonférence de l'interface entre rotor et stator, sur une machine réelle en fonctionnement, en régime permanent ou en régime transitoire. Pour effectuer la mesure dynamique de ce jeu, il est connu d'utiliser des capteurs de proximité dont le fonctionnement est basé sur des phénomènes électriques, optiques, ou radiofréquences.

L'invention concerne un dispositif permettant d'effectuer la mesure par une méthode basée sur des phénomènes électriques de type capacitif consistant à mesurer la charge d'un condensateur constitué par une surface conductrice d'un capteur fixé dans le stator en regard du rotor et une surface conductrice du rotor susceptible d'être située en regard de la précédente au cours de la rotation du rotor par rapport au stator.

Les caractéristiques d'un dispositif de mesure par méthode capacitive dépendent du type de polarisation et du type de conditionnement du capteur capacitif.

Certains dispositifs de mesure connus utilisent un capteur capacitif polarisé par une tension alternative et conditionné soit par un oscillateur, soit par un amplificateur de charges. Dans ces dispositifs, la technologie du capteur capacitif et du câble de liaison entre le capteur et la chaîne de mesure est généralement triaxiale.

D'autres dispositifs de mesure connus utilisent un capteur capacitif polarisé par une tension continue et conditionné par un amplificateur de tension, la technologie du capteur et du câble de liaison entre le capteur et la chaîne de mesure est généralement coaxiale.

Dans tous ces dispositifs connus, le capteur et le câble de liaison présentent des capacités résiduelles qui interviennent dans la calibration de la chaîne de mesure ; la calibration doit donc être effectuée à chaque fois qu'il y a un changement de capteur ou de câble de liaison.

Par ailleurs tous ces dispositifs connus nécessitent un étalonnage de la chaîne de mesure en site ce qui ne permet pas au constructeur d'effectuer une calibration en vue d'une utilisation en série reproductible.

Enfin, pour tous ces dispositifs connus, le résultat de la mesure est influencé par la température du capteur et du câble de liaison.

Le brevet européen EP 0.172.766 décrit un appareil de mesure du jeu entre un rotor et un stator utilisant un capteur capacitif relié à un dispositif de mesure du courant de charge et de décharge du condensateur formé par les deux surfaces en regard. Le capteur et le cable de liaison sont de technologie triaxiale et les mesures effectuées sont des mesures différentielles pour s'affranchir des erreurs introduites par l'appareil de mesure. Le capteur capacitif n'est pas polarisé par une tension continue mais par une tension qui est interrompue périodiquement pour mesurer le courant de décharge du condensateur, ce qui nécessite un dispositif de commande et de traitement du signal fourni par le capteur assez complexe.

Le brevet Français 2.608.751 décrit une chaîne de mesure capacitive dans laquelle le capteur capacitif, de technologie triaxiale, est relié à une entrée d'un amplificateur de charges. Pour réduire les capacités parasites, l'amplificateur de charges est alimenté par une source de tension continue flottante non référencé à la terre. Ceci nécessite l'utilisation d'un transformateur, d'un redresseur et d'une cellule de filtrage ainsi que deux sources d'alimentation différentes dont une source de tension alternative pour alimenter le transformateur.

Le but de l'invention est de réaliser un dispositif de mesure dynamique par méthode capacitive qui ne présente pas les inconvénients des dispositifs connus, pour lequel l'étalonnage de la chaîne de mesure en site n'est pas nécessaire et permettant une utilisation en série pour effectuer un contrôle actif des jeux.

Un autre but de l'invention est de réaliser un dispositif de mesure permettant de mesurer d'une part, le jeu moyen de l'aubage et d'autre part, le jeu individuel de chaque aube.

Pour cela, le dispositif de mesure selon l'invention utilise un capteur capacitif polarisé par une tension continue et conditionné par un amplificateur de charges ayant une structure de filtre passe-haut, de préférence du deuxième ordre. La technologie du capteur et du câble de liaison est coaxiale. La calibration de la chaîne de mesure est effectuée de façon théorique sans avoir recours à un étalonnage.

Selon l'invention, le dispositif pour effectuer la mesure dynamique du jeu entre des extrémités d'aubes tournantes et un stator de turbomachine, comportant au moins un capteur capacitif destiné à être monté dans le stator au droit des aubes et au moins une chaîne de mesure reliée au capteur, le capteur comprenant une électrode destinée à coopérer avec les extrémités des aubes de façon à définir un condensateur à capacité variable à chaque passage d'une aube sous l'électrode du capteur, la chaîne de mesure comportant un dispositif de conditionnement du capteur et des moyens de traitement du signal délivré par le dispositif de conditionnement, est caractérisé en ce que le dispositif de conditionnement est un amplificateur de charges ayant une structure de filtre passe-haut, en ce que le capteur capacitif et l'amplificateur de charges sont polarisés par une même tension continue, la tension continue de polarisation étant déterminée de façon que la valeur moyenne du signal de sortie du dispositif de conditionnement soit égale à une valeur de consigne en tension.

D'autres particularités et avantages de l'invention apparaitront clairement dans la suite de la description donnée à titre d'exemple non limitatif et faite en regard des figures annexées qui représentent :

- la figure 1, une vue en coupe illustrant un exemple de capteur capacitif installé dans un carter, selon l'invention ;

- la figure 2, un schéma d'un exemple de réalisation d'un dispositif de conditionnement ayant une structure de filtre passe-haut du premier ordre, selon une première réalisation de l'invention ;

- la figure 3, un exemple de dispositif de conditionnement ayant une structure de filtre passe-haut du deuxième ordre, selon une deuxième réalisation de l'invention ;

- la figure 4a, un exemple d'une aube isolée se déplaçant à vitesse constante devant une électrode de capteur ; la figure 4b, le signal de sortie du dispositif de conditionnement correspondant au cas de la figure 4a, selon l'invention ;

- la figure 5, un schéma synoptique de la chaine de mesure permettant de mesurer le jeu individuel de chaque aube, selon l'invention ;

- la figure 6, un schéma synoptique de la chaine de mesure permettant de mesurer le jeu moyen de l'aubage lorsque la géométrie de l'aubage est parfaitement connue, selon l'invention ;

- la figure 7, un schéma synoptique de la chaine de mesure dans le cas où la géométrie de l'aubage n'est pas connue, selon l'invention.

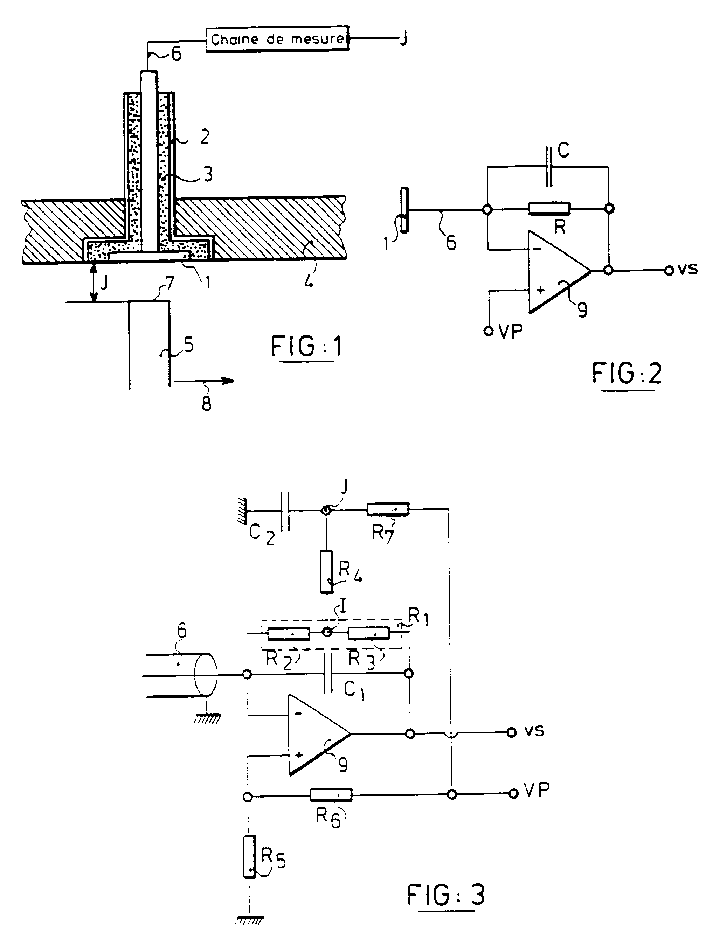

La figure 1 représente une vue en coupe illustrant un exemple de capteur capacitif installé dans un carter, selon l'invention.

Le capteur capacitif est de technologie coaxiale. Il comporte une électrode centrale 1 montée dans un câble chemisé 2 par l'intermédiaire d'un isolant 3. Le câble 2 est fixé dans une ouverture pratiquée dans la paroi du carter 4 et de façon à ce que l'électrode 1 affleure la surface du carter en regard avec les aubes 5. Le câble 2 comporte une gaine reliée au même potentiel que le carter.

L'électrode du carter est reliée, par l'intermédiaire d'une liaison coaxiale 6, à une chaine de mesure permettant de déterminer la valeur des jeux J entre le sommet des aubes 7 et le carter 4.

Les sommets des aubes défilent devant l'électrode du capteur dans un sens représenté par la flèche 8. Chaque extrémité d'aube forme, avec l'électrode du capteur, un condensateur dont la capacité est une fonction de la distance qui sépare cette extrémité d'aube de l'électrode. Pour mesurer cette capacité, le capteur capacitif est polarisé par une tension continue et conditionné par un amplificateur de charges à polarisation continue.

La figure 2 représente un schéma d'un exemple de réalisation d'un dispositif de conditionnement ayant une structure de filtre passe-haut du premier ordre, selon une première réalisation de l'invention.

L'électrode 1 du capteur capacitif est reliée par l'intermédiaire de la liaison coaxiale 6 à un amplificateur de charges polarisé par une tension continue VP et ayant une structure de filtre passe-haut.

Cet amplificateur de charges comporte un amplificateur opérationnel 9 ayant une borne d'entrée positive alimentée par une tension continue VP, une borne d'entrée négative reliée à l'électrode 1 du capteur capacitif et portée au même potentiel que la borne d'entrée positive (principe de base des amplificateurs opérationnels), et une borne de sortie délivrant un signal de sortie Vs fonction de la capacité due aux passages des aubes sous le capteur. Cette capacité est variable au cours du temps : elle est quasiment nulle lorsque les sommets d'aube sont loin de l'électrode du capteur; elle est maximale lorsqu'un sommet d'aube est juste en-dessous de l'électrode du capteur.

Une résistance R et une capacité C sont connectées en parallèle entre la borne d'entrée négative et la borne de sortie de l'amplificateur opérationnel. Les valeurs de la résistance et de la capacité sont choisies de manière que l'amplificateur de charges constitue un filtre passe-haut ayant une fréquence de coupure, $fc = 1/(2 \pi RC)$, inférieure à la fréquence de passage des aubes et supérieure à la fréquence de variations des capacités résiduelles du capteur et de la liaison coaxiale.

De cette façon, seule la variation de capacité due au passage des aubes sous l'électrode du capteur est prise en compte et le signal de sortie Vs de l'amplificateur de charges n'est fonction que de la géométrie du condensateur constitué par l'électrode du capteur et le sommet d'une aube, et du gain électrique de l'amplificateur de charges et en particulier de la capacité d'intégration C.

Sur la figure 2, l'amplificateur de charges a une structure de filtre passe-haut du premier ordre. Pour obtenir de meilleures performances, il est préférable d'utiliser un dispositif de conditionnement ayant une structure de filtre passe-haut du deuxième ordre. Une structure de filtre passe-haut du deuxième ordre permet notamment d'obtenir une meilleure réjection des basses fréquences parasites éventuelles, d'obtenir une meilleure dynamique et d'effectuer une surveillance permanente de la résistance d'isolement du capteur.

La figure 3 représente un exemple de dispositif de conditionnement ayant une structure de filtre passe-haut du deuxième ordre, selon une deuxième réalisation de l'invention.

Le dispositif de conditionnement comporte un amplificateur opérationnel 9 ayant une borne d'entrée négative reliée à l'électrode du capteur capacitif, une borne d'entrée positive, et une borne de sortie, une résistance R6 connectée entre la borne d'entrée positive et une tension de polarisation VP et une résistance R5 connectée entre la borne d'entrée positive et la masse électrique du conditionneur, une capacité C1 et une résistance R1 sont connectées en parallèle entre la borne d'entrée négative et la borne de sortie de l'amplificateur opérationnel. La résistance R1 est constituée de deux résistances R2 et R3 connectées en série en un point de jonction I. Une résistance R4 est connectée entre le point I et un point J, une résistance R7 est connectée entre le point J et la tension VP, une capacité C2 est connectée entre le point J et la masse électrique du dispositif de conditionnement. Les valeurs des différentes résistances sont choisies de façon que la composante continue du signal de sortie Vs soit nulle, en supposant que la résistance d'isolement du capteur est infinie.

Dans ces conditions, le gain du dispositif de conditionnement est $G = \frac{1}{C1} \cdot \frac{R5}{R5+R6}$, et la tension de sortie du dispositif de conditionnement est Vs = G.VP.$\Delta$C aube, où $\Delta$C aube représente la variation de capacité due aux passages des aubes sous l'électrode du capteur.

Cette variation de capacité est proportionnelle à la surface s(x) du condensateur constitué par l'électrode et le sommet de l'aube en regard du capteur à l'instant de mesure et inversement proportionnelle au jeu J, où x représente la position de l'aube par rapport au capteur. Dans la suite de la description, la surface s(x) est appelée surface commune entre l'électrode et le sommet d'aube.

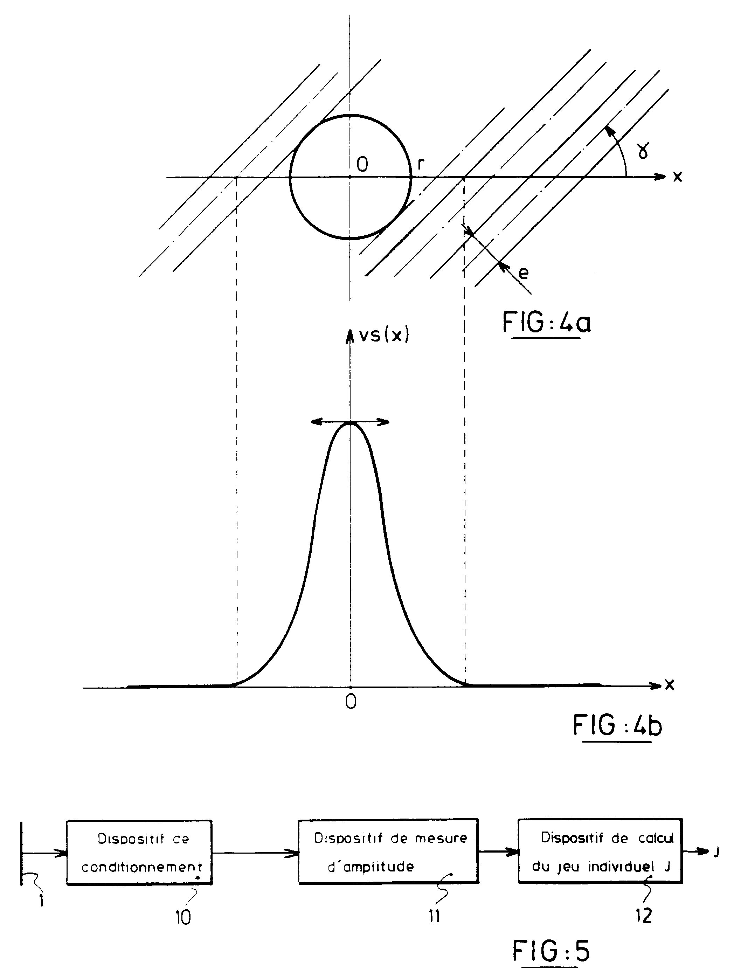

Sur les figures 4a et 4b sont représentés respectivement, en 4a, un exemple d'une aube isolée se déplaçant à vitesse constante devat une électrode de capteur ; en 4b, le signal de sortie du dispositif de conditionnement correspondant au cas de la figure 4a, selon l'invention.

L'électrode du capteur représenté en figure 4a a la forme d'un disque de rayon r. L'aube qui défile devant cette électrode à vitesse constante et suivant la direction x est approximée à une lame à face parallèle d'épaisseur e inférieure au diamètre 2r de l'électrode et d'angle de calage γ.

Lorsque le sommet de l'aube est loin de l'électrode du capteur, il n'y a pas de surface commune entre l'électrode et le sommet de l'aube et le signal de sortie du dispositif de conditionnement est nul puisque celui-ci est un filtre passe-haut qui rejette les basses fréquences parasites inférieures à la fréquence de passage des aubes sous le capteur.

Lorsque le sommet de l'aube est sous l'électrode du capteur, le signal de sortie Vs(x) du dispositif de conditionnement varie proportionnellement à la surface s(x) commune entre l'électrode et le sommet de l'aube. Le signal de sortie du dispositif de conditionnement a donc la forme d'une impulsion d'amplitude maximale $\Delta$ VS max proportionnelle à la tension de polarisation VP et à la surface commune maximale Smax et inversement proportionnelle au jeu J entre l'électrode et le sommet de l'aube. La forme d'onde du signal Vs(x) est identique à la forme d'onde de s(x).

Dans le cas d'une roue aubagée en rotation comportant des aubes identiques et régulièrement espacées, le signal de sortie du dispositif de conditionnement est constitué par une succession d'impulsions de fréquence de récurrence égale à la fréquence de passage des aubes sous l'électrode du capteur. Du fait de la structure de filtre passe-haut du dispositif de conditionnement, la valeur moyenne de ce signal est nulle. Ainsi, lorsque les caractéristiques géométriques de l'ensemble constitué par le capteur et les aubes et la surface Smax sont connues de façon précise, les variations du signal de sortie du dispositif de conditionnement peuvent être déterminées théoriquement préalablement à la mesure. La calibration de la chaine de mesure est alors effectuée de façon théorique sans qu'il soit nécessaire d'effectuer un étalonnage.

La figure 5 représente un schéma synoptique de la chaine de mesure permettant de mesurer le jeu individuel de chaque aube, selon l'invention.

La chaine de mesure est reliée à l'électrode 1 d'un capteur capacitif par l'intermédiaire d'un cable coaxial. Elle comporte, en série, un dispositif de conditionnement 10, un dispositif de mesure d'amplitude 11, et un dispositif de calcul 12 du jeu individuel J de chaque aube. Le dispositif de mesure 11 est destiné à mesurer l'amplitude maximale individuelle $\Delta$ VS max de chaque impulsion obtenue en sortie du dispositif de conditionnement 10. Le dispositif de calcul 12 du jeu individuel J est destiné à effectuer l'opération suivante :

$$J = (A.VP / \Delta VS\ max) . Smax$$

où A est une constante égale à G. εo, où εo représente la constante diélectrique de l'isolant, constitué généralement par de l'air sec, du condensateur formé par le sommet d'aube et l'électrode du capteur, en supposant que ce condensateur se comporte comme un condensateur plan.

La connaissance précise de Smax pour chaque aube n'est obtenue que lorsque l'épaisseur de chaque aube est connue avec précision.

La mesure précise de l'amplitude de chaque impulsion peut être effectuée de manière connue par exemple à partir d'un top de synchronisation, par un premier échantillonnage du signal immédiatement avant le début de l'impulsion et un deuxième échantillonnage du signal lorsque sa valeur est proche du maximum de l'impulsion, puis en effectuant la différence des deux valeurs ainsi obtenues.

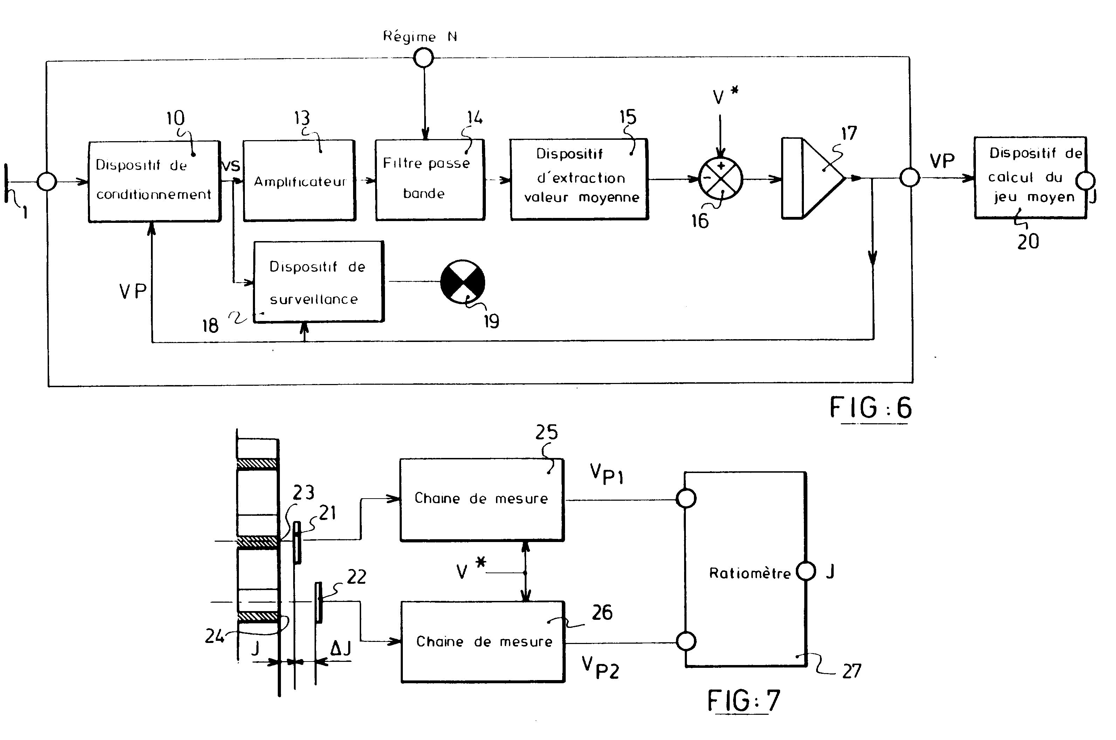

La figure 6 représente un schéma synoptique de la chaine de mesure permettant de mesurer le jeu moyen de l'aubage lorsque la géométrie de l'aubage est parfaitement connue et lorsque toutes les aubes sont identiques, selon l'invention.

La chaine de mesure est reliée à l'électrode d'un capteur capacitif par l'intermédiaire d'une liaison coaxiale. Elle est constituée par une boucle intégrale qui comporte, en série, un dispositif de conditionnement 10, un amplificateur de tension 13 de gain K, un filtre passe-bande 14 programmé en fonction de la vitesse de rotation du rotor de la turbomachine de façon que le gabarit de filtrage soit constant quel que soit le régime N du moteur, un dispositif 15 d'extraction de la valeur moyenne et un dispositif de comparaison 16 pour comparer la valeur du signal à une valeur de consigne en tension, le résultat issu de la comparaison étant transmis à un dispositif intégrateur 17 ayant un gain en continu infini qui délivre une valeur de tension continue VP transmise en retour au dispositif de conditionnement 10 comme valeur de tension de polarisation.

La boucle intégrale est donc une boucle de régulation de l'amplitude de la tension de polarisation VP du dispositif de conditionnement. Cette régulation est effectuée de manière qu'à l'équilibre la valeur moyenne, après amplification et filtrage, du signal de sortie du dispositif de conditionnement est égale à la valeur de consigne en tension V*.

La chaine de mesure comporte en outre un dispositif de surveillance 18 de la résistance d'isolement du capteur relié à un dispositif d'alarme 19. Le dispositif de surveillance 18 reçoit en entrée les valeurs de la tension de sortie VS et de la tension de polarisation VP du dispositif de conditionnement et effectue la comparaison entre ces deux valeurs afin de détecter une éventuelle détérioration de la résistance d'isolement du capteur. Lorsqu'une détérioration est détectée, le dispositif de surveillance 18 envoie au dispositif d'alarme 19 un signal de déclenchement de l'alarme.

La connaissance précise des caractéristiques géométriques de l'ensemble constitué par le capteur capacitif et l'aubage permet de connaitre avec précision la surface moyenne So commune entre l'électrode et le sommet d'aube. Cette surface moyenne est calculée mathématiquement à partir de l'évolution de s(x). Dans le cas où les sommets d'aube peuvent être considérés comme des lames à faces parallèles et où l'électrode du capteur capacitif est circulaire, l'expression de la surface moyenne So est la suivante :

$$So = (\pi . r^2 \cdot e) / (Xo . \sin \gamma)$$

où r est le rayon de l'électrode du capteur capacitif, e est l'épaisseur d'aube, Xo est le pas d'aube et $\gamma$ est l'angle de calage d'aube.

La calibration de la chaine de mesure est alors effectuée en imposant une valeur de consigne en tension de valeur :

$$V^* = B. So^* \text{ (filtrée)}$$

telle que, à l'équilibre, la relation suivante soit satisfaite:

$$VP. A. \frac{So \text{ (filtrée)}}{J} . K = B. So^* \text{ (filtrée)}$$

où B est un coefficient constant obtenu par calcul pour une valeur de jeu particulière et So* (filtrée) = So (filtrée), le gabarit de filtrage étant le même que celui du filtre 14.

Lorsque l'équilibre est obtenu, la valeur de la tension de polarisation VP est proportionnelle au jeu moyen de l'aubage puisque le gabarit de filtrage est constant quel que soit la vitesse de rotation du rotor de la turbomachine. La valeur de tension VP délivrée par le dispositif intégrateur 17 est transmise à un dispositif de calcul 20 du jeu moyen entre l'électrode du capteur et les extrémités d'aube.

La figure 7 représente un schéma synoptique de la chaine de mesure dans le cas où la géométrie de l'aubage n'est pas connue, selon l'invention.

L'aubage ne peut pas toujours être considéré comme une succession de lames à faces parallèles du fait, notamment, de la forme des aubes en sommet d'aube, de la non maitrise des positions axiales des aubages et des dispersions des épaisseurs des aubes. Par conséquent, suivant la position respective de l'électrode du capteur par rapport au sommet des aubes, les évolutions de la surface commune s(x) sont différentes et correspondent à des calibrations différentes. Dans ce cas, l'invention consiste à disposer dans le stator deux capteurs capacitifs identiques 21 et 22 avec un jeu différent J et J+ΔJ par rapport aux extrémités des aubes 23, 24, les capteurs étant disposés dans un même plan perpendiculaire à l'axe de la machine tournante de façon à "voir" la même surface d'aube s (x).

Le jeu J est le jeu à mesurer, le jeu Δ J est connu.

Les capteurs capacitifs 21 et 22 sont reliés respectivement à deux chaines de mesure 25, 26 ayant des gains électriques identiques et calibrés de la même manière en leur imposant des valeurs de consigne en tension identiques par un même affichage. Cette valeur de consigne en tension V* est calculée avec une valeur S'o approximative, mais du même ordre de grandeur, de la surface moyenne commune entre l'électrode de l'un des capteurs et le sommet des aubes, la valeur de S'o étant comprise entre 0,1 So et 10 So, où So représente la surface commune réelle. Les signaux de sortie VP1 et VP2 de chacune des chaines de mesure sont transmis à un ratiomètre 27 qui délivre en sortie une mesure du jeu moyen J entre les surfaces en regard du carter et du sommet des aubes.

Si k' est le gain en tension de chaque chaine de mesure, les signaux de sortie VP1 et VP2 sont respectivement égaux à :

$$VP1 = k' \; J/S'o$$

$$VP2 = k' \; (J + \Delta J) / S'o$$

Pour obtenir une mesure du jeu moyen J, le ratiomètre effectue l'opération suivante :

$$J = \Delta J. \frac{VP1}{VP1 - VP2}$$

Lorsque la valeur du jeu est déterminée, le ratiomètre permet de calculer la surface moyenne So d'aube réellement "vue" par les capteurs capacitifs. Cette surface moyenne peut alors être affichée sur d'éventuelles autres chaines de mesure, non équipées de ratiomètre, utilisées sur le même étage du rotor.

L'invention n'est pas limitée aux exemples de réalisation précisément décrits. En particulier pour des raisons de sécurité, l'électrode du capteur peut être montée en retrait dans le carter. Dans ce cas, il est nécessaire de tenir compte de la valeur R du retrait pour l'établissement de la consigne de calibration en remplaçant tous les termes J faisant intervenir le jeu mesuré par le capteur par le terme J + R. De même, la géométrie de l'électrode peut être différente d'un disque.

**Revendications**

1. Dispositif pour effectuer la mesure dynamique du jeu entre des extrémités d'aubes tournantes et un stator de turbomachine, comportant au moins un capteur capacitif destiné à être monté dans le stator au droit des aubes et au moins une chaine de mesure reliée au capteur, le capteur comprenant une électrode destinée à coopérer avec les extrémités des aubes de façon à définir un condensateur à capacité variable à chaque passage d'une aube sous l'électrode du capteur, la chaine de mesure comportant un dispositif de conditionnement du capteur et des moyens de traitement du signal délivré par le dispositif de conditionnement, caractérisé en ce que le dispositif de conditionnement (10) est un amplificateur de charges ayant une structure de filtre passe-haut, en ce que le capteur capacitif et l'amplificateur de charges sont polarisés par une même tension continue, la tension continue de polarisation étant déterminée de façon que la valeur moyenne du signal de sortie du dispositif de conditionnement (10) soit égale à une valeur de consigne en tension.

2. Dispositif selon la revendication 1, caractérisé en ce que la chaine de mesure est reliée à l'électrode (1) du capteur capacitif par l'intermédiaire d'une liaison coaxiale (6).

3. Dispositif selon la revendication 2, caractérisé en ce que le dispositif de conditionnement (10) comporte un amplificateur opérationnel (9) ayant une borne d'entrée positive, une borne d'entrée négative et une borne de sortie, au moins une résistance et une capacité connectés en parallèle entre la borne d'entrée négative et la borne de sortie, la borne d'entrée positive étant reliée à une tension de polarisation continue, la borne d'entrée négative étant reliée à l'électrode (1) du capteur capacitif et portée au même potentiel que la borne d'entrée positive.

4. Dispositif selon la revendication 3, caractérisé en ce que le dispositif de conditionnement (10) constitue un filtre passe-haut du deuxième ordre destiné à délivrer un signal de sortie proportionnel à la tension de polarisation et à la variation de capacité due aux passages des aubes sous l'électrode du capteur.

5. Dispositif selon la revendication 4, caractérisé en ce que la chaine de mesure comporte, en série, le dispositif conditionneur (10), un dispositif de mesure d'amplitude (11) et un dispositif de calcul (12) du jeu individuel de chaque aube.

6. Dispositif selon la revendication 4, caractérisé en ce que la chaine de mesure comporte une boucle intégrale de régulation de la tension de polarisation du dispositif de conditionnement (10), la boucle de régulation comportant en série le dispositif de conditionnement (10), un amplificateur de tension (13), un filtre passe-bande (14), un dispositif (15) d'extraction de valeur moyenne, un dispositif de comparaison (16) du signal à une valeur de consigne en tension, un dispositif intégrateur (17) à gain continu infini destiné à délivrer une tension continue proportionnelle au jeu moyen entre l'électrode du capteur et les extrémités d'aubes, cette tension étant transmise en retour au dispositif de conditionnement (10) comme valeur de tension de polarisation.

7. Dispositif selon la revendication 6, caractérisé en ce que la chaine de mesure comporte en outre un dispositif de surveillance (18) de la résistance d'isolement du capteur relié à un dispositif d'alarme (19).

8. Dispositif selon la revendication 6, caractérisé en ce que le filtre passe-bande (14) est programmé en fonction de la vitesse de rotation du rotor de façon que le gabarit de filtrage soit constant quel que soit la valeur de cette vitesse.

9. Dispositif selon la revendication 8, caractérisé en ce que la valeur de consigne en tension est déterminée mathématiquement à partir de la connaissance des caractéristiques géométriques de l'ensemble constitué par le capteur capacitif et les aubes, cette valeur étant proportionnelle à la surface moyenne filtrée commune entre l'électrode du capteur et les extrémités d'aubes, la valeur du coefficient de proportionnalité étant déterminée en fixant une valeur de jeu particulière, le gabarit de filtrage de la surface moyenne étant le même que celui du filtre passe-bande (14) disposé dans la boucle de régulation.

10. Dispositif selon la revendication 9, caractérisé en ce que la valeur de tension délivrée par le dispositif intégrateur (17) est transmise à un dispositif de calcul (20) du jeu moyen entre l'électrode du capteur et les extrémités d'aube.

11. Dispositif selon l'une quelconque des revendications 1 à 8, caractérisé en ce qu'il comporte deux capteurs capacitifs (21, 22) destinés à être montés dans le stator d'une turbomachine au droit des aubes, avec des jeux différents en extrémités d'aube, l'écart entre les jeux étant connu, et dans un même plan perpendiculaire à l'axe de la turbomachine, ces deux capteurs étant respectivement reliés à deux chaines de mesure (25, 26) ayant des gains électriques identiques et calibrés de la même manière en leur imposant des valeurs de consigne en tension identiques, et en ce qu'il comporte en outre un ratiomètre (27) connecté en sortie des deux chaines de mesure (25, 26) et destiné à effectuer la comparaison des signaux délivrés par les deux chaines de mesure et à délivrer en sortie une valeur du jeu moyen entre l'électrode du capteur et les extrémités d'aube.

12. Dispositif selon la revendication 11, caractérisé en ce que la valeur de consigne en tension imposée aux deux chaines de mesure est déterminée mathématiquement en fixant une valeur approximative de la surface moyenne commune entre l'électrode de l'un des capteurs et les extrémités d'aube.

**Patentansprüche**

1. Vorrichtung zur Durchführung der dynamischen Messung des Spiels zwischen den rotierenden Schaufelenden und einem Turbomaschinenstator, die mindestens einen kapazitiven Meßfühler, der in dem Stator in der Verlängerung der Schaufeln angebracht werden soll, und mindestens eine mit dem Meßfühler verbundene Meßkette aufweist, wobei der Meßfühler eine Elektrode aufweist, die mit den Enden der Schaufeln dergestalt zusammenwirken soll, daß bei jedem Durchlauf einer Schaufel unter der Elektrode des Meßfühlers ein Kondensator mit variabler Kapazität gebildet wird, wobei die Meßkette eine Vorrichtung zur Konditionierung des Meßfühlers und der Mittel zur Verarbeitung des von der Konditionierungsvorrichtung abgegebenen Signals aufweist,
**dadurch gekennzeichnet, daß** die Vorrichtung zur Konditionierung (10) ein Ladungsverstärker mit einer Hochpaßfilter-Struktur ist, daß der kapazitive Meßfühler und der Ladungsverstärker durch eine und dieselbe Gleichspannung polarisiert werden, wobei die Polarisierungs-Gleichspannung dergestalt bestimmt wird, daß der Durchschnittswert des Ausgangssignals der Konditionierungsvorrichtung (10) gleich einem Soll-Spannungswert ist.

2. Vorrichtung nach Anspruch 1,
**dadurch gekennzeichnet, daß** die Meßkette über eine koaxiale Verbindung (6) mit der Elektrode (1) des kapazitiven Meßfühlers verbunden ist.

3. Vorrichtung nach Anspruch 2,
**dadurch gekennzeichnet, daß** die Konditionierungsvorrichtung (10) aus einem Funktionsverstärker (9), der eine positive Eingangsklemme, eine negative Eingangsklemme und eine Ausgangsklemme besitzt, aus mindestens einem Widerstand und einer Kapazität, die parallel zwischen der negativen Eingangsklemme und der Ausgangsklemme geschaltet sind, besteht, wobei die positive Eingangsklemme mit einer Polarisierungs-Gleichspannung verbunden ist, die negative Eingangsklemme mit der Elektrode (1) des kapazitiven Meßfühlers verbunden ist und auf das gleiche Potential gebracht wird wie die positive Eingangsklemme.

4. Vorrichtung nach Anspruch 3,
**dadurch gekennzeichnet, daß** die Konditionierungsvorrichtung (10) einen Hochpaßfilter zweiter Ordnung darstellt, der dazu gedacht ist, ein Ausgangssignal abzugeben, das proportional zu der Polarisierungsspannung und zu der Kapazitätsänderung aufgrund des Durchlaufs der Schaufeln unter der Elektrode des Meßfühlers ist.

5. Vorrichtung nach Anspruch 4,
**dadurch gekennzeichnet, daß** die Meßkette in Reihe geschaltet die Konditionierungsvorrichtung (10), eine Amplitudenmeßvorrichtung (11) und eine Recheneinrichtung (12) zur Berechnung des jeweiligen Spiels der einzelnen Schaufeln aufweist.

6. Vorrichtung nach Anspruch 4,
**dadurch gekennzeichnet, daß** die Meßkette eine Integralschleife zur Regelung der Polarisierungsspannung der Konditionierungsvorrichtung (10), wobei die Regelschleife in Reihe geschaltet die Konditionierungsvorrichtung (10), einen Spannungsverstärker (13), einen Bandfilter (14), eine Vorrichtung (15) zur Ausgabe des Durchschnittswerts, eine Komparatoreinrichtung (16) zum Vergleichen des Signalwerts mit einem Spannungs-Sollwert, einer Integrationsvorrichtung (17) mit einer unendlichen Gleichstromverstärkung, die eine Gleichspannung abgeben soll, die proportional zu dem durchschnittlichen Spiel zwischen der Elektrode des Meßfühlers und den Schaufelenden ist, aufweist, wobei als Polarisierungsspannungswert zu der Konditionierungsvorrichtung (10) zurückübertragen wird.

7. Vorrichtung nach Anspruch 6,
**dadurch gekennzeichnet, daß** die Meßkette ferner eine Überwachungseinrichtung (18) bezüglich des Isolationswiderstandes des Meßfühlers aufweist, die mit einer Alarmvorrichtung (19) verbunden ist.

8. Bandfilter (14) als Funktion der Drehgeschwindigkeit des Rotors dergestalt programmiert wird, daß das Filtermaß bei jeder Drehzahl N des Motors konstant ist.

9. Vorrichtung nach Anspruch 8,
**dadurch gekennzeichnet, daß** der Spannungs-Sollwert mathematisch aus der Kenntnis der geometrischen Merkmale der Gesamtanordnung des kapazitiven Meßfühlers und den Schaufeln bestimmt werden kann, wobei dieser Wert proportional zu der gemeinsamen, gefilterten, durchschnittlichen Fläche zwischen der Elektrode des Meßfühlers und den Schaufelenden ist, wobei der Wert des Proportionalitätskoeffizienten bestimmt wird, indem ein spezieller Wert für das Spiel festgesetzt wird, und wobei das Filtermaß der durchschnittlichen Fläche das gleiche ist wie das des Bandfilters (14), der in der Regelschleife angeordnet ist

10. Vorrichtung nach Anspruch 9,
**dadurch gekennzeichnet, daß** der von der Integrationsvorrichtung (17) abgegebene Spannungswert zu einer Recheneinrichtung (20) zur Berechnung des durchschnittlichen Spiels zwischen der Elektrode des Meßfühlers und den Schaufelenden übertragen wird.

11. Vorrichtung nach einem der Ansprüche 1 bis 8,
**dadurch gekennzeichnet, daß** sie zwei kapazitive Meßfühler (21, 22) aufweist, die dazu gedacht sind, in dem Stator einer Turbomaschine in der Verlängerung der Schaufeln mit unterschiedlichem Spiel zu den Schaufelenden, wobei der Unterschied zwischen den Spielen bekannt ist, sowie in einer und derselben, zur Achse der Turbomaschine senkrechten Ebene angebracht zu werden, wobei diese beiden Meßfühler mit zwei Meßketten (25 bzw. 26) verbunden sind, die identische elektrische Verstärkungsgrade aufweisen und in gleicher Weise kalibriert sind, indem ihnen durch eine und dieselbe Anzeige identische Spannungs-Sollwerte gesetzt werden, und daß sie ferner ein Ratiometer (27) aufweist, das an den Ausgang der beiden Meßketten (25 bzw. 26) angeschlossen ist und dazu gedacht ist, den Vergleich zwischen den von den beiden Meßketten abgegebenen Signalen durchzuführen und am Ausgang einen Wert für das durchschnittliche Spiel zwischen der Elektrode des Meßfühlers und den Schaufelenden abzugeben.

12. Vorrichtung nach Anspruch 11,
**dadurch gekennzeichnet, daß** der Spannungs-Sollwert, der für die beiden Meßketten gesetzt wird, mathematisch bestimmt wird, indem ein Näherungswert für die gemeinsame durchschnittliche Fläche der Elektrode eines der Meßfühler und der Schaufelenden festgesetzt wird.

**Claims**

1. Device for dynamically measuring the clearance between rotating blade tips and a turbomachine stator, including at least one capacitive sensor intended to be mounted in the stator square with the blades and at least one measurement chain linked to the sensor, the sensor comprising an electrode intended to cooperate with the tips of the blades in such a way as to define a variable-capacitance capacitor with each passage of a blade under the electrode of the sensor, the measurement chain including a device for conditioning the sensor and means for processing the signal delivered by the conditioning device, characterized in that the conditioning device (10) is a charge amplifier having a high-pass filter structure, in that the capacitive sensor and the charge amplifier are biased by one and the same DC voltage, the DC bias voltage being determined in such a way that the mean value of the output signal from the conditioning device (10) is equal to a voltage instruction value.

2. Device according to Claim 1, characterized in that the measurement chain is linked to the electrode (1) of the capacitive sensor by way of a coaxial link (6).

3. Device according to Claim 2, characterized in that the conditioning device (10) includes an operational amplifier (9) having a positive input terminal, a negative input terminal and an output terminal, at least one resistance and one capacitance connected in parallel between the negative input terminal and the output terminal, the positive input terminal being linked to a DC bias voltage, the negative input terminal being linked to the electrode (1) of the capacitive sensor and taken to the same potential as the positive input terminal.

4. Device according to Claim 3, characterized in that the conditioning device (10) constitutes a second-order high-pass filter intended for delivering an output signal proportional to the bias voltage and to the variation in capacitance due to the passages of the blades under the electrode of the sensor.

5. Device according to Claim 4, characterized in that the measurement chain includes, in series, the conditioner device (10), an amplitude measurement device (11) and a device (12) for calculating the individual clearance of each blade.

6. Device according to Claim 4, characterized in that the measurement chain includes an integral loop for regulating the bias voltage of the conditioning device (10), the regulating loop including in series the conditioning device (10), a voltage amplifier (13), a band-pass filter (14), a mean value extraction device (15), a device (16) for comparing the signal with a voltage instruction value, an integrator device (17) with infinite DC gain intended for delivering a DC voltage proportional to the mean clearance between the electrode of the sensor and the blade tips, this voltage being transmitted back to the conditioning device (10) as bias voltage value.

7. Device according to Claim 6, characterized in that the measurement chain furthermore includes a device (18) for monitoring the insulation resistance of the sensor linked to an alarm device (19).

8. Device according to Claim 6, characterized in that the band-pass filter (14) is programmed as a function of the rate of rotation of the rotor in such a way that the filter template is constant irrespective of the value of this rate.

9. Device according to Claim 8, characterized in that the voltage instruction value is determined mathematically from the knowledge of the geometrical characteristics of the assembly consisting of the capacitive sensor and the blades, this value being proportional to the common filtered mean surface area between the electrode of the sensor and the blade tips, the value of the coefficient of proportionality being determined by fixing a particular value of clearance, the filter template of the mean surface area being the same as that of the band-pass filter (14) arranged in the regulating loop.

10. Device according to Claim 9, characterized in that the voltage value delivered by the integrator device (17) is transmitted to a device (20) for calculating the mean clearance between the electrode of the sensor and the blade tips.

11. Device according to any one of Claims 1 to 8, characterized in that it includes two capacitive sensors (21, 22) intended to be mounted in the stator of a turbomachine square with the blades, with different blade tip clearances, the discrepancy between the clearances being known, and in one and the same plane perpendicular to the axis of the turbomachine, these two sensors being respectively linked to two measurement chains (25, 26) having identical electrical gains and calibrated in the same way by imposing thereon identical voltage instruction values, and in that it furthermore includes a ratio meter (27) output-connected to the two measurement chains (25, 26) and intended to perform the comparison of the signals delivered by the two measurement chains and to deliver as output a value of the mean clearance between the electrode of the sensor and the blade tips.

12. Device according to Claim 11, characterized in that the voltage instruction value imposed on the two measurement chains is determined mathematically by fixing an approximate value of the common mean surface area between the electrode of one of the sensors and the blade tips.

FIG : 1

FIG : 2

FIG : 3

FIG:4a

FIG:4b

FIG:5

FIG:6

FIG:7